# EUROPEAN PATENT APPLICATION

(11) **EP 2 551 815 A1**
(43) Date of publication of application: **30.01.2013**
(21) Application number: 11185806.4
(22) Date of filing: 19.10.2011
(51) Int. Cl.: G06Q 30/02

(54) **A computer system for processing product data**

(30) Priority: 27.07.2011 GB 201112905
(71) Applicant: Sainsbury's Supermarkets Ltd., London EC1N 2HT (GB)
(72) Inventor: Burton, Daniel, Reading, Berkshire RG4 7RE (GB)
(74) Representative: Driver, Virginia Rozanne

(57) **Abstract**

The invention relates to a computer system located at a retail premises for executing a point of sale transaction comprising: a point of sale terminal having an interface for receiving product data from at least one product purchased by a customer, the product data including a first price for the product; a processor arranged to execute a computer program which receives from the point of sale terminal first price data including at least said first price and second price data pertaining to the product, the second price data being from a remote source, compares the first price data with the second price data and issues a voucher request based on the comparison of the first and second price data; and a voucher issuing unit arranged to receive the voucher request and to automatically provide a voucher to the customer responsive to the voucher request.

## Description

The present invention relates to a computer system for processing product data and particularly to a computer system, a method and a computer program product executed in a processor for executing a point of sale transaction.

One of the problems facing retailers today is how to process product data, including price data, so as to keep customers up to date with current price data, offers, discounts, comparisons with competitors, etc.

One way in which product data including price data can be displayed to members of the public in a retail premise, such as supermarket, is to provide labels, either on each product or secured to the shelves where the products are located. In the former case, it is very labour intensive to change the labels when a price change occurs. Moreover, it is difficult to flag discount offers and competitor comparison offers using this system.

When labels are applied to shelves, there can be confusion as to which products are associated with the labels and it is still relatively labour intensive to manually change the labels and keep customers up to date with constantly changing price data.

Digital display systems do exist, whereby price information can in principle be displayed locally in association with products and managed by a central computer system. Such systems are extremely expensive to implement and to-date are not widely implemented in customer oriented retail environments for this reason. Moreover, such systems do not permit a retail outlet to indicate to a customer that their price is intended to match a competitors' price.

A recently introduced solution adopted by some retailers to indicate to customers that they are matching competitors' prices involves a customer, after making their purchases, to access a website of the retailer, to enter information concerning their purchases and to return to the retail outlet concerned if the purchase price of certain products that they have purchased exceeds that of named competitors.

The present invention is directed to providing a solution to the above-mentioned difficulties, and to provide a system and method for processing product data in such a way that a customer can receive the benefit of competitor price matching without the need for expensive display technology in the store and in a manner easier for customers to implement.

According to one aspect of the present invention, there is provided a computer system for executing a point of sale transaction comprising:
a point of sale terminal having an interface for receiving product data from at least one product purchased by a customer, the product data including a first price for the product;
a processor arranged to execute a computer program which receives from the point of sale terminal first price data including at least said first price and second price data pertaining to the product, the second price data being from a remote source, compares the first price data with the second price data and issues a voucher request based on the comparison of the first and second price data; and
a voucher issuing unit arranged to receive the voucher request and to automatically provide a voucher to the customer responsive to the voucher request.

The first price data can be a single price or the sum of first prices for multiple products purchased by the customer. In the latter case the first price data is compared with a sum of second prices of multiple comparable products from one or more competitor.

In one embodiment, the voucher issuing unit comprises a printer operable to print the voucher responsive to the voucher request. The printer is ideally located at the point of sale, such that a customer receives immediately a printed voucher having a value relating to the difference between the first and second price data for products which they have purchased. Thus, if a customer purchases products which are more expensive than a competitors', the computer system of the present invention automatically issues that customer with a voucher for the difference in price, at the point of sale of the retailer. This is thus much simpler for a customer.

The voucher can be associated with a redemption authentication element, such as a barcode, e.g. printed on the face of the voucher.

As an alternative to printing the voucher, the voucher issuing unit can be operable to store the voucher to an electronic memory associated with a customer, such as a data card. That data card could be a loyalty card or similar, and could entitle the customer to other kinds of voucher in addition to the difference voucher.

As an alternative to printing a voucher or storing the voucher to an electronic memory, the voucher issuing unit can be operable to generate a message to a remote (e.g. customer-owned mobile device), the message including the voucher. The remote device can be: a customer owned mobile device; a web server hosting a website; and a customer email account. A message could alternatively be generated for transmission to a web server hosting a website or a customer email account. In each case, addressing and formatting of the message can be handled at the voucher issuing unit responsive to the voucher request.

The computer system can include a server which is operable to obtain second prices for a plurality of products from one or more competitors and to provide said second prices to the processor, whereby the server acts as the remote source. Such a server can collect and update prices in real time or periodically throughout the day.

In one embodiment, the voucher request can include a customer identifier, such that the voucher is associated with the customer identified by the customer identifier.

The point of sale terminal can be adapted to read the customer identifier from a data card associated with the customer during the transaction.

In another aspect, the present invention provides a processor for supporting a point of sale transaction, the processor being arranged to receive from a point of sale terminal transaction details pertaining to a customer and including product data from at least one product and a customer identifier of the customer, the product data including first price data including at least a first price for the product, wherein the processor is arranged to execute a computer program which further receives second price data pertaining to the at least one product from a remote source and which compares the first price data with the second price data and issues a voucher request based on the comparison, the voucher request being issued in a data stream supplying transaction details from the processor to a voucher issuing unit, and the voucher request including a differential value between the first price data and the second price data and the customer identifier.

A further aspect provides a method a method of executing a point of sale transaction comprising:
at a point of sale terminal receiving product data from at least one product purchased by a customer, the product data including a first price for the product;
supplying first price data including at least the first price to a processor arranged to execute a computer program which further receives second price data pertaining to the at least one product, the second price data being from a remote source, which compares the first price data with the second price data and which is arranged to issue a voucher request based on the comparison;
supplying the voucher request to a voucher issuing unit which automatically provides a voucher to the customer responsive to the voucher request.

In some retail units, a voucher issuing unit (for example, in the form of a printer) may already be present for printing other types of vouchers, such as discount vouchers, etc. In that case, it is advantageous if the processor is arranged to issue the voucher request in a data stream supplied from the processor to the voucher issuing unit, the data stream including transaction data representing transactions conducted by the customer at the point of sale terminal.

For a better understanding of the present invention and to show how the same may be carried into effect, reference will now be made to the accompanying drawings, in which:
Figure 1 is a schematic diagram;
Figures 2 and 3 show alternative voucher issuing units;
Figure 4 is a block diagram of a network system; and
Figure 5 is a schematic block diagram of a prior art comparison system.

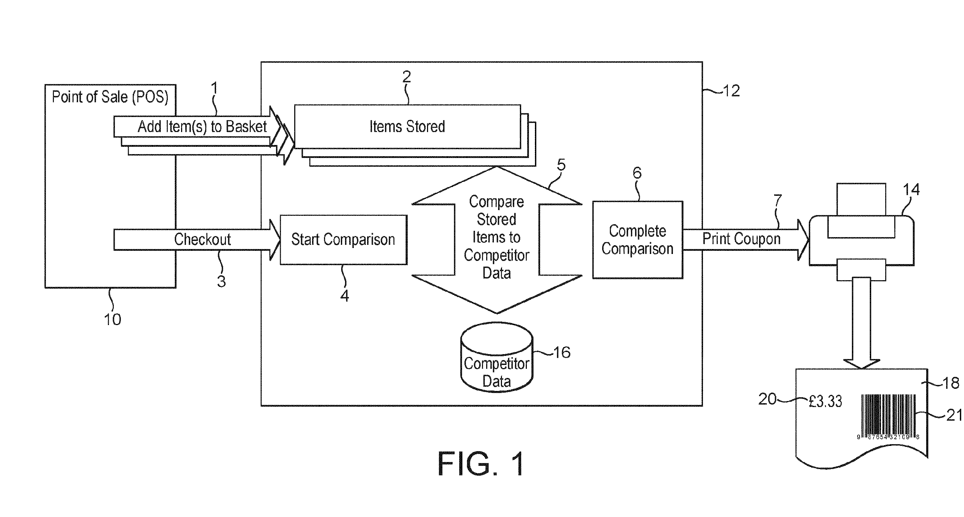

Figure 1 is a schematic diagram of one embodiment of the present invention. A computer system comprises a point of sale terminal 10, a server 12 and a voucher issuing unit 14 including a printer 14. The point of sale terminal comprises a device for scanning barcodes of products as they are purchased by a customer, the barcode indicating product data including price data. As each item is scanned, product data for the item is supplied from the point of sale terminal 10 to the server 12 as denoted by arrow 1 in Figure 1. As denoted by block 2, messages denoting the product data of purchased items are stored as a transaction at a memory in the server 12.

When the customer performs a checkout, as denoted by arrow 3 (that is they pay for all the purchased items), a transaction complete message is sent to the server 12. As denoted at block 4, the server 12 then operates to compare price data of the customers purchased items with price data of comparable items from competitors. Such price data is held in a database 16 at the server 12. The comparison function is indicated by the double-headed arrow denoted by 5 in Figure 1. When the comparison has been completed, and if it has been determined that a competitors' total transaction value is cheaper (see block 6), a voucher request is issued denoted by arrow 7, the voucher request including information defining the difference between the customer purchase price and the competitors' price of the comparable items. The voucher request is received by the voucher issuing unit in the form of printer 14 which acts to print a voucher 18 having a face value 20 matching the value of the difference. The printed voucher 18 can also include a barcode 21 which identifies the voucher as a difference voucher to distinguish it from other types of voucher that might be generated at the voucher issuing unit 14.

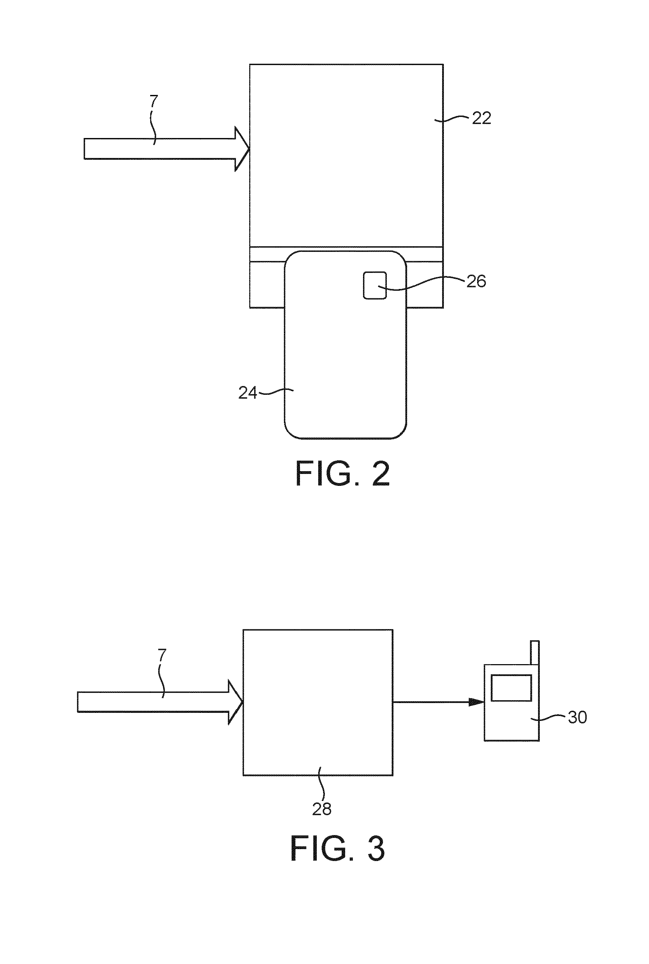

As shown in Figure 2, an alternative to the printer 14 for the voucher issuing unit can be a mechanism for receiving a data card 24 associated with the customer. The data card 24 can include an electronic memory 26. In this way, if the data card 24 is inserted into the device 22, responsive to the voucher request a discount voucher can be loaded onto the card 24 by being stored into the electronic memory 26. A suitable data card could be a Smart Card, or Loyalty Card.

In a further embodiment shown in Figure 3, the voucher issuing unit takes the form of a device 28 which receives the voucher request 7 and can issue a wireless signal to a customer mobile device 30.

Although not necessarily evident from Figure 1, the voucher issuing unit in the form of printer 14 or card reading device 22 can be located at the point of sale terminal 10. When the card reading device 22 is present, a customer identifier can be read from the data card associated with the customer during the transaction, and this can be inserted into the voucher request. In this way, the voucher can be associated with the customer identified by the customer identifier. Other methods of inputting the customer identifier at the point of sale terminal are possible, for example, an operator could key in the customer identifier.

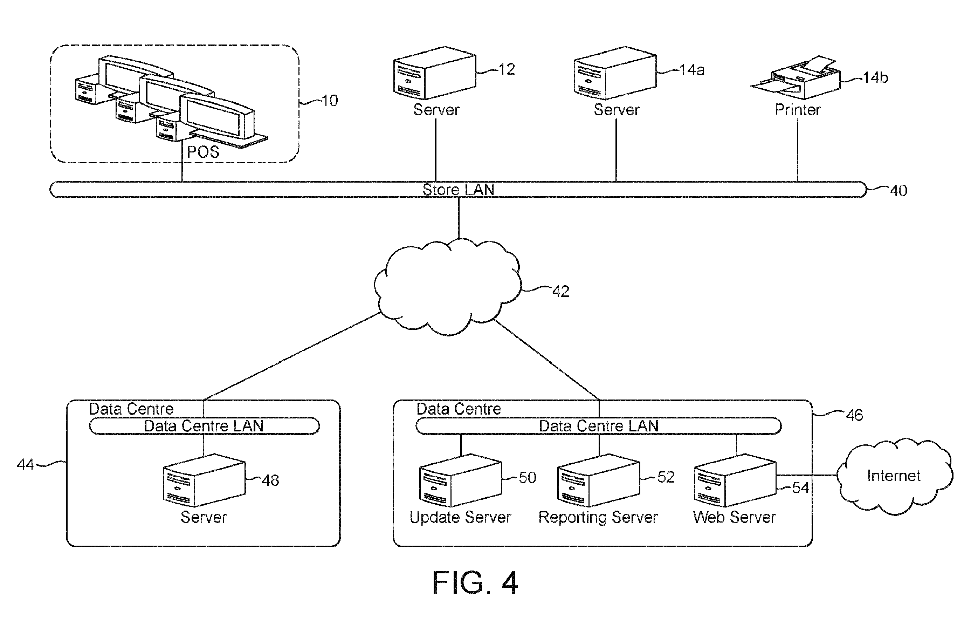

Figure 4 is a schematic diagram of a networked system within which the computer system according to embodiments of the present invention can be implemented. Figure 4 illustrates the point of sale terminal 10, the server 12 and the voucher issuing unit 14 connected to a local network within a store/retail premises 40. It will be appreciated from Figure 4, that the voucher issuing unit 14 comprises a local server 14a and printing device 14b. The local network 40 is connected via a communications network, for example, the Internet or a cloud-based network 42 to a retailer data centre and a price-data data centre. The retailer data centre 44 comprises a real time server 48. The price-data data centre 46 comprises an update server 50, a reporting server 52 and a web server 54. The components of the system shown in Figure 4 have the following functions.

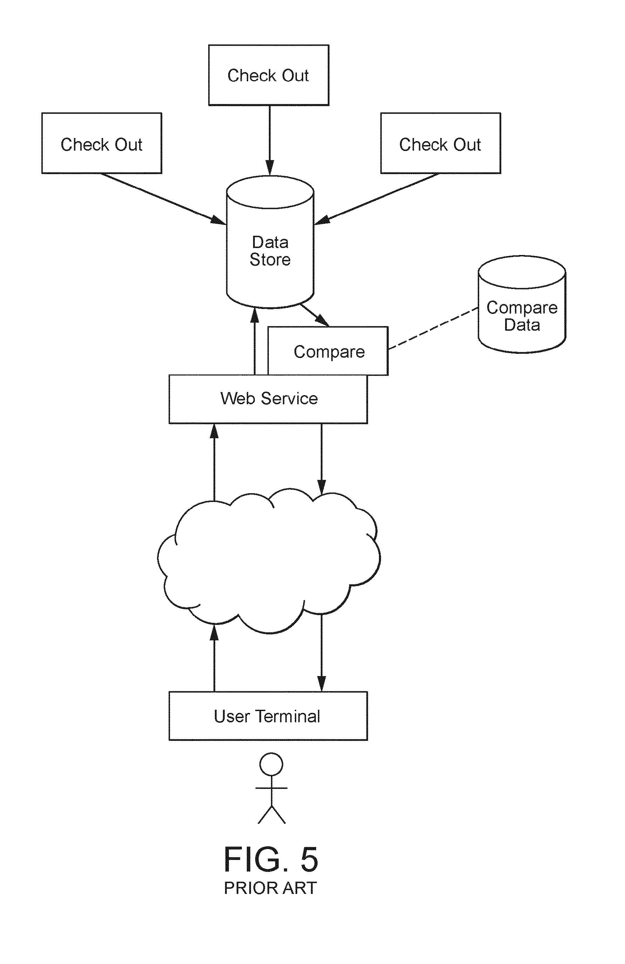

In Figure 5, a plurality of checkouts are illustrated, each representing the checkout function of a particular store. Each time a customer checks out, their transaction data is supplied to a centralised data store. If a user wants to make use of the comparison function, which his indicated diagrammatically by the block labelled "compare", he accesses a user terminal with Internet connectivity to call up a web service which has access to the compare function and the data store. The compare function operates on data supplied by the customer at the point of checkout, which is transmitted to the data store, and compare data which is derived from competitor's products and updated on a regular basis.

This arrangement has a number of disadvantages. A user can only user compare function if they have access to a user terminal with web connectivity. Furthermore, they must move from the checkout to that user terminal (wherever it is located) and enter their information in order to access the compare function via the web service. Therefore, one problem is that without access to a user terminal with Internet connectivity, a customer cannot take advantage of the service.

Another problem is that if Internet connectivity is lost, a user cannot access the service. Moreover, if the data store goes down, then the service becomes inoperable.

As already explained with reference to Figure 1, the point of sale terminal accepts customer transactions and transmits them to the server 12, via the local network 40. Price data is supplied to the server 12 from the update server 50 in the price-data data centre 46.

The server 12 compares transactions at a basket level with competitor pricing, and as described above if a positive difference exists, then the server updates data sent to the server 14a of the voucher issuing unit, instructing that a specifically valued voucher be printed. The server 14a accepts the transaction details, the number of any customer Loyalty Card, data from the server 12 including difference price data and actuates the printer 14b to print vouchers accordingly. The web server 54 is public facing and can be used for record checking and customer care centre queries. The server 48 at the data centre 44 can allow a customer care centre to check the status of printed and non-printed vouchers. The reporting server 52 can receive audit data from the server 12 and database requests from the web server 54 so as to reconcile audit data from the in-store server 12. It will be appreciated that there could be multiple servers 12 within a store. In that case, audit data can be reconciled across the multiple servers.

Data which is supplied to the server 12 from the server 50 at the price-data data centre 46 can be obtained in a number of different ways. For example, the server can be linked to a number of client terminals at which data is entered, or it can be supplied directly to the server from researchers and price monitors, etc. The ability of a data centre to extract data on prices of competitors' products is known and so is not discussed further herein.

In one embodiment of the invention, the difference vouchers are used in a system which already prints other kinds of discount vouchers using the server 14a and printer 14b. In that case, transaction data from the point of sale terminal which is supplied to the server 14a and printer 14b can be in the form of a data stream which includes the voucher request.

The nature of products on which the price comparison is to be effected, can be determined at the update server 50 of the data centre 46 and/or by the retail operator and managed at the server 12.

Embodiments of the invention described above provide significant advantages with respect to the prior art as illustrated for example, in Figure 5. A first advantage is that a voucher is printed for the customer in real time while they are still at the checkout of the store. Thus, a customer does not require access to a user terminal with Internet access, nor do they have to wait to receive their voucher.

A second advantage relates to the architecture of the system. The comparison function is carried out by a server 12 within each store. Thus, if for some reason the comparison function is rendered inoperable or out of order, only one store (or the parts of the store affected by that server) are affected - customers in other stores are able to continue to receive the vouchers. Due to the centralised nature of the function as illustrated in the architecture of Figure 5, if it is rendered inoperable then the system of Figure 5 is inoperable across all stores.

Furthermore, competitor price data is held locally in database 16 at the server 12. If this database is rendered inoperable, once again, this affects only one store or the parts of that store served by that server. The database 16 receives competitor data on a periodic basis from the update server 50 in the price data centre 46, for example, via the Internet 42. If for any reason the update server 50 becomes inoperable, the local server 12 within the store can continue to function based on the last data which it received and held at its local database 16. Thus, a function can be maintained for a short time even after the price data centre 46 does down. Once again, this is in contrast to the effect of a breakdown in the data store in the architecture of Figure 5. It would be possible to put in place a rule whereby the period of time over which vouchers continue to be issued on old data is limited to a certain amount.

As the compare and voucher issue function are handled locally within the store, the limit on the number and/or value of difference vouchers can be set within the store and thus can vary store-by-store to take into account differing customer profiles in different locations.

Another advantage arising from the architecture is that the system can be "dark launched". That is, all parts of the system can be rendered operable apart from the print function. Instead, the server can provide information on operability of the system for example, in its periodic updates to the data centre 46 such that it can be determined whether or not the system is functioning properly before the printer is connected and caused to operate.

The architecture of Figure 5 does not permit such a "dark launch".

While the above-described embodiments of the invention are focussed on an in-store environment, it will be appreciated that the principles can be extended to on-line purchases.

In the preferred embodiment, the value of the voucher shall be calculated by comparing the total value (price data) of items in a basket of a customer transaction with the total value of comparable items as priced by competitors. However, it would be possible in principle to effect the comparison on an item-by-item basis.

The competitor could be a single competitor, or multiple competitors as determined either by the update server 50 or the server 12.

The value comparison could be applied to a minimum number of comparable items in a customer transaction to qualify for a difference voucher. The minimum could be set at one or more items. This refers to the minimum number of comparable items purchased by a customer, rather than the minimum number of items in a transaction. The system can include an ability to set a limit on the number and/or value of difference vouchers that are issued to customers in a given store within a certain time period, for example, one hour.

It is possible to set maximum and minimum values for the face value of the difference voucher.

It is possible to set the system so that a difference voucher is only issued if a total basket value reaches or exceeds a certain amount. The server 12 is capable of transmitting periodic updates on key information from stores to the data centre 46. It is possible to adjust when and how often an update is issued. The update can include the following:
1. whether the server is still running
2. the number and value of vouchers that have been issued by store and per hour
3. whether the threshold on the limit of vouchers that can be issued in a store within a certain time period has been met. Once this threshold has been met, the system can:
   (a) trigger an automatic switch that prevents the printing of further vouchers;
   (b) send an automatic alter to an agreed contact list warning them that the threshold has been met and that no further vouchers will be printed; and
   (c) continue to keep a record of all vouchers that have not been printed.

The server keeps a record of what messages have been sent to the server 14a at the voucher issuing unit so as to record which transactions have been received, which of these transactions were eligible for a difference voucher and what other types of vouchers were sent for printing.

If there is a failure to print a voucher in real time at the point of sale transaction for any reason, a next time solution is available. In place of real time, next time shall process all relevant transactions and issue a voucher for customers to collect from a subsequent visit to a participating retail outlet. The next time solution keeps a record of all transactions for a given time period, for example, for two years, although it is possible that vouchers will only be issued to customers within a certain period (for example 28 days) after their original transaction.

Thus, embodiments of the invention provide a system that provides comparison based discount vouchers that are printed as part of a customer transaction, processed by an engine. As customer items are scanned, messages are sent to the engine, where they are stored as a transaction. When the customer performs a check-out (i.e. pays for their items), a transaction complete message is sent to the engine. The engine then compares the customer's items with comparable items from competitors. If a competitor's total transaction value is cheaper, then a discount voucher matching the value of the difference will be printed in real-time. The system can compare promotions, including multi-buy purchases. Alternatively, or additionally, the system can compare multiple competitors at the same time. It is also possible to print a "negative voucher" or "equal voucher" showing the customer how much they saved in their transaction.

The term "voucher" has been used above in the context of providing information to a customer concerning price comparisons. It will readily be appreciated that the term voucher is not restricted to a voucher which matches the value of the difference such that a customer can use it in subsequent transactions in place of money. As mentioned above, another possibility is a "negative voucher" or "equal voucher" showing the customer how much they saved in their transaction. This is more in the form of a printed message than what would generally be understood as a "voucher" in the trade. Similarly, the printed message can state that the customer's shop was no more expensive ("equal voucher").

It will further be appreciated that the term "electronic memory" used herein may be implemented as an electronic record or electronic storage device.

It will further be appreciated that customer loyalty data could be stored on a card or a central customer database or a specific loyalty system.

It will be appreciated that the database 16 can take any suitable form, including any type of appropriate memory data store.

It will be appreciated that each of the components mentioned above could be implemented by any suitable computer executing a computer program, or in hardware or firmware as appropriate. In particular, reference to a server is not intended to be restrictive: any suitably implemented processor with associated memory for holding an executable computer program would suffice.

## Claims

1. A computer system located at a retail premises for executing a point of sale transaction comprising:
a point of sale terminal having an interface for receiving product data from at least one product purchased by a customer, the product data including a first price for the product;
a processor arranged to execute a computer program which receives from the point of sale terminal first price data including at least said first price and second price data pertaining to the product, the second price data being from a remote source, compares the first price data with the second price data and issues a voucher request based on the comparison of the first and second price data; and
a voucher issuing unit arranged to receive the voucher request and to automatically provide a voucher to the customer responsive to the voucher request.

2. A computer system according to claim 1, wherein the voucher issuing unit comprises a printer operable to print the voucher responsive to the voucher request, the printer preferably located at the point of sale.

3. A computer system according to claim 1, wherein the voucher issuing unit is operable to store the voucher to an electronic memory associated with a customer, the electronic memory optionally provided on a data card.

4. A computer system according to any preceding claim which comprises a server located away from the retail premises operable to obtain second prices for a plurality of products and to provide said second prices to the processor, whereby the server acts as the remote source.

5. A computer system according to any preceding claim, wherein the processor is connected to a local database at the retail premises for receiving and storing said second price data.

6. A computer system according to claim 1, wherein the voucher issuing unit is operable to generate a message for transmission to a remote device, said message including the voucher.

7. A computer system according to any preceding claim, wherein the voucher request includes a customer identifier, such that the voucher is associated with the customer identified by the customer identifier.

8. A computer system according to claim 7, wherein the point of sale terminal is adapted to read the customer identifier from a data card associated with the customer during the transaction.

9. A computer system according to any preceding claim wherein the processor is arranged to issue the voucher request in a data stream supplied from the processor to the voucher issuing unit, the data stream including transaction data representing transactions conducted by the customer at the point of sale terminal.

10. A computer system according to any preceding claim wherein the processor is located at a server situated at the retail premises which receives transaction data from transactions conducted by a customer at the point of sale terminal.

11. A processor for supporting a point of sale transaction, the processor being arranged to receive from a point of sale terminal transaction details pertaining to a customer and including product data from at least one product and a customer identifier of the customer, the product data including first price data including at least a first price for the product, wherein the processor is arranged to execute a computer program which further receives second price data pertaining to the at least one product from a remote source and which compares the first price data with the second price data and issues a voucher request based on the comparison, the voucher request being issued in a data stream supplying transaction details from the processor to a voucher issuing unit, and the voucher request including a differential value between the first price data and the second price data and the customer identifier.

12. A processor according to claim 11, wherein the computer program receives first prices from multiple products, generates a sum of the first prices as said first price data and compares the first price data with a sum of second prices of multiple comparable products.

13. A method of executing a point of sale transaction comprising:
at a point of sale terminal receiving product data from at least one product purchased by a customer, the product data including a first price for the product;
supplying first price data including at least the first price to a processor arranged to execute a computer program which further receives second price data pertaining to the at least one product, the second price data being from a remote source, which compares the first price data with the second price data and which is arranged to issue a voucher request based on the comparison;
supplying the voucher request to a voucher issuing unit which automatically provides a voucher to the customer responsive to the voucher request.

14. A method according to claim 13, wherein the voucher request identifies the difference between the first and second price of at least one product purchased by the customer.

15. A method according to claim 13, wherein the voucher request identifies the difference between first price data being a sum of first prices of multiple products and second price data being a sum of second prices of multiple comparable products.

16. A method according to claim 13 or 14, wherein the step of providing the voucher to the customer includes: printing the voucher;
storing the voucher on electronic memory of a data card associated with the customer; or
generating a message for receipt by a mobile device of the customer.

17. A method according to any of claims 13 to 16 wherein the voucher request is issued in a data stream which further includes transaction details of transactions conducted by the customer.

18. A networked retail system comprising a plurality of computer systems in accordance with claim 1, each located at a respective retail premises;
a communication network for supplying second price data to the processor of each computer system; and
a server acting as the remote source, the server supplying second price data to the plurality of computer systems via the communication network.

19. A retail network according to claim 18, wherein the computer system at each retail premises is operable to supply periodic updates to an update server accessible via the communication network.

## Amended claims

### Amended claims in accordance with Rule 137(2) EPC.

**1.** A computer system located at a retail premises for executing a point of sale transaction comprising:
a point of sale terminal having an interface for receiving product data from at least one product purchased by a customer, the product data including a first price for the product;
a processor arranged to execute a computer program which receives from the point of sale terminal first price data including at least said first price and second price data pertaining to the product, the second price data being from a remote source, compares the first price data with the second price data and issues a voucher request based on the comparison of the first and second price data; and
a voucher issuing unit arranged to receive the voucher request and to automatically provide a voucher to the customer responsive to the voucher request.

**2.** A computer system according to claim 1, wherein the voucher issuing unit comprises a printer operable to print the voucher responsive to the voucher request, the printer preferably located at the point of sale.

**3.** A computer system according to claim 1, wherein the voucher issuing unit is operable to store the voucher to an electronic memory associated with a customer, the electronic memory optionally provided on a data card.

**4.** A computer system according to any preceding claim which comprises a server located away from the retail premises operable to obtain second prices for a plurality of products and to provide said second prices to the processor, whereby the server acts as the remote source.

**5.** A computer system according to any preceding claim, wherein the processor is connected to a local database at the retail premises for receiving and storing said second price data.

**6.** A computer system according to claim 1, wherein the voucher issuing unit is operable to generate a message for transmission to a remote device, said message including the voucher.

**7.** A computer system according to any preceding claim, wherein the voucher request includes a customer identifier, such that the voucher is associated with the customer identified by the customer identifier.

**8.** A computer system according to claim 7, wherein the point of sale terminal is adapted to read the customer identifier from a data card associated with the customer during the transaction.

**9.** A computer system according to any preceding claim wherein the processor is arranged to issue the voucher request in a data stream supplied from the processor to the voucher issuing unit, the data stream including transaction data representing transactions conducted by the customer at the point of sale terminal.

**10.** A computer system according to any preceding claim wherein the processor is located at a server situated at the retail premises which receives transaction data from transactions conducted by a customer at the point of sale terminal.

**11.** A processor for supporting a point of sale transaction, the processor being arranged to receive from a point of sale terminal transaction details pertaining to a customer and including product data from at least one product and a customer identifies of the customer, the product data including first price data including at least a first price for the product, wherein the processor is arranged to execute a computer program which further receives second price data pertaining to the at least one product from a remote source and which compares the first price data with the second price data and issues a voucher request based on the comparison, the voucher request being issued in a data stream supplying transaction details from the processor to a voucher issuing unit, and the voucher request including a differential value between the first price data and the second price data and the customer identifier.

**12.** A processor according to claim 11, wherein the computer program receives first prices from multiple products, generates a sum of the first prices as said first price data and compares the first price data with a sum of second prices of multiple comparable products.

**13.** A method of executing a point of sale transaction comprising:
at a point of sale terminal receiving product data from at least one product purchased by a customer, the product data including a first price for the product;
supplying first price data including at least the first price to a processor arranged to execute a computer program which further receives second price data pertaining to the at least one product, the second price data being from a remote source, which compares the first price data with the second price data and which is arranged to issue a voucher request based on the comparison;
supplying the voucher request to a voucher issuing unit which automatically provides a voucher to the customer responsive to the voucher request.

**14.** A method according to claim 13, wherein the voucher request identifies the difference between the first and second price of at least one product purchased by the customer.

**15.** A method according to claim 13, wherein the voucher request identifies the difference between first price data being a sum of first prices of multiple products and second price data being a sum of second prices of multiple comparable products.

**16.** A method according to claim 13 or 14, wherein the step of providing the voucher to the customer includes: printing the voucher;
storing the voucher on electronic memory of a data card associated with the customer; or
generating a message for receipt by a mobile device of the customer.

**17.** A method according to any of claims 13 to 16 wherein the voucher request is issued in a data stream which further includes transaction details of transactions conducted by the customer.

**18.** A networked retail system comprising a plurality of computer systems in accordance with claim 1, each located at a respective retail premises;
a communication network for supplying second price data to the processor of each computer system ; and
a server acting as the remote source, the server supplying second price data to the plurality of computer systems via the communication network.

**19.** A retail network according to claim 18, wherein the computer system at each retail premises is operable to supply periodic updates to an update server accessible via the communication network.

**20.** A computer system according to claim 2, or a method according to any of claims 13 to 16, wherein a discount voucher; a negative voucher; or an equal voucher is printed depending on the comparison of the first and second price data.

**21.** A computer system according to any of claims 1 to 10, wherein the voucher issuing unit is rendered inoperable and the server is operable to provide information on operability of the system so that it can be determined whether or not the system is functioning properly before the voucher issuing unit is connected and calls to operate.

**22.** A computer system according to claim 2, wherein the printer is rendered inoperable and the server is operable to provide information on operability of the system so that it can be determined whether or not the system is functioning properly before the printer is connected and calls to operate.

**23.** A computer system according to any of claims 1 to 10, which is operable to set a limit on the number and/or value of vouchers which are issued to customers at a given retail premises within a certain time period.

**24.** A computer system according to claim 23, wherein the processor is operable to transmit periodic update to an update server, wherein the periodic updates include information about the number and value of vouchers that have been issued by the retail premises.
